# DEMANDE DE BREVET EUROPEEN

(11) **EP 0 822 028 A1**
(43) Date de publication de la demande: **04.02.1998**
(21) Numéro de dépôt: 97401810.3
(22) Date de dépôt: 28.07.1997
(51) Int. Cl.: B23K 26/00, G02B 6/44

(54) **Procédé d'obtention de surlongueur de fibres optiques dans un turbe métallique de protection et ligne de mise en oeuvre**

(30) Priorité: 01.08.1996 FR 9609723
(71) Demandeur: Alcatel Submarine Networks, 92110 Clichy (FR)
(72) Inventeur: Libert, Jean-François, 62360 Pont de Briques (FR); Le Gac, Renaud, 62100 Calais (FR); Comello, Walter, 62185 Frethun (FR)
(74) Mandataire: Buffière, Michelle

(57) **Abrégé**

Les fibres optiques sont introduites avec une surlongueur contrôlée dans un tube métallique de protection, formé à partir d'une bande initiale puis soudé au laser et éventuellement rétreint au fur et à mesure de son défilement en ligne.

Le procédé d'obtention de la surlongueur d'une valeur prédéterminée est caractérisé en ce qu'il consiste à soumettre le tube entraîné à une élongation ultérieure de cette valeur prédéterminée, par un cabestan travaillant à couple constant en assurant ainsi l'avance des fibres dans le tube soudé, puis à relaxer le tube étiré.

Application : ligne de mise de fibres optiques sous tube de protection

## Description

La présente invention concerne un procédé d'obtention de surlongueur de fibres optiques dans un tube métallique de protection et une ligne de mise en oeuvre de ce procédé. D'une manière générale connue, une ou plusieurs fibres optiques mises sous tube métallique de protection sont prévues en surlongueur dans ce tube et sont noyées dans une matière de remplissage. Cette surlongueur évite que les fibres soient soumises à des contraintes indésirables préjudiciables à une bonne qualité de transmission des signaux optiques dans les fibres. Cette surlongueur ne doit cependant pas être trop importante pour éviter les risques de courbures excessives des fibres dans le tube de protection, qui sont pareillement préjudiciables à la qualité de transmission des signaux optiques.

Le tube métallique de protection des fibres est réalisé en continu à partir d'une bande initiale déformée progressivement en tube alors fermé en long par soudure laser, au fur et à mesure du défilement de la bande et du tube résultant sur une ligne de mise des fibres dans ce tube. Les fibres sont introduites dans le tube de protection par un tube de guidage, qui est engagé dans le tube de protection encore entr'ouvert et s'étend dans celui-ci au-delà du point de soudure laser sur la ligne. Le tube de protection soudé est le plus souvent rétreint pour lui donner un diamètre final minimal souhaité et en parfaire la forme. Il est également refroidi directement après sa soudure laser ou sa rétreinte éventuelle.

Le document WO 91/01506 décrit une telle ligne de mise de fibres optiques sous tube métallique de protection et divulgue un procédé et les moyens de contrôle de la surlongueur des fibres dans le tube de protection. A cet effet, les fibres sont introduites dans le tube de guidage et par là dans le tube de protection avec une vitesse d'introduction contrôlée en temps réel. Cette vitesse d'introduction est contrôlée à partir des mesures instantanées de la force de traction exercée sur le tube de protection pour son défilement en ligne, de la vitesse de défilement du tube de protection et de la température de celui-ci, de façon à obtenir un rapport prédéterminé entre les longueurs du tube de protection et des fibres optiques dans ce tube.

Les mesures instantanées de la vitesse du tube de protection et de sa température sont effectuées après sa rétreinte. La mesure instantanée de la force de traction est effectuée par un capteur associé à un cabestan de traction entraîné par un moteur auto-synchrone. Ces différentes valeurs instantanées sont transmises à une centrale de commande. Celle-ci a préalablement reçu d'un opérateur les informations relatives notamment à la surlongueur souhaitée des fibres dans le tube de protection, le coefficient de dilatation du métal de ce tube, son module d'élasticité et la géométrie de ce tube. Elle détermine en conséquence au moyen d'un programme préétabli la valeur instantanée de la vitesse d'introduction des fibres, qui est transmise à un moteur auto-synchrone de commande des moyens d'introduction des fibres, tels qu'une chenille d'introduction de ces fibres dans le tube de guidage.

Ces moyens connus par ce document sont relativement complexes. Ils ne permettent pas toujours l'obtention d'une surlongueur des fibres homogène et suffisamment précise dans le tube métallique de protection réalisé. En particulier, la surlongueur obtenue est liée au taux de rétreinte réalisée et aux caractéristiques et la nature précises du tube, qui influent sur la force de traction et peuvent conduire à des imprécisions plus ou moins importantes de cette surlongueur réelle obtenue.

La présente invention a pour but de résoudre de manière très simple et fiable les problèmes précités, pour l'obtention d'une surlongueur réelle homogène et réglée avec grande précision des fibres.

Elle a pour objet un procédé de mise en surlongueur de fibres optiques dans un tube métallique de protection, consistant à mettre une bande métallique initiale en forme de tube, à souder de manière étanche ce tube, à entraîner simultanément en ligne la bande initiale et le tube formé et soudé et à introduire et faire avancer au moins une fibre optique dans le tube formé et soudé en donnant une surlongueur voulue à chaque fibre optique, caractérisé en ce qu'il consiste à soumettre ledit tube soudé et entraîné en ligne à un étirage ultérieur d'une valeur prédéterminée, à réaliser l'avance de chaque fibre optique dans ledit tube à la vitesse linéaire d'avance du tube étiré, puis à laisser se relaxer le tube étiré, pour obtenir la surlongueur voulue égale à ladite valeur prédéterminée dans le tube relaxé. Avantageusement, ledit étirage est effectué en soumettant le tube entraîné en ligne à un effort de traction constant et prédéterminé.

De préférence, ledit tube est également rétreint avant l'étirage du tube, l'élongation d'étirage étant indépendante du taux de rétreinte réalisée.

L'invention a également pour objet une ligne de mise de fibres optiques sous tube métallique de protection, mettant en oeuvre ce procédé et comportant des moyens de formage déformant ladite bande en tube, des moyens de soudage étanche du tube formé, des moyens d'introduction de chaque fibre optique dans ledit tube formé et soudé, des moyens d'avance de chaque fibre optique et des moyens de défilement en ligne de la bande et du tube formé et soudé, caractérisée en ce qu'elle comporte un cabestan monté en aval desdits moyens de défilement, travaillant à couple constant et recevant ledit tube, pour constituer des moyens d'étirage de ce tube d'une valeur prédéterminée et assurer la relaxation du tube étiré en sortie dudit cabestan et pour simultanément constituer lesdits moyens d'avance de chaque fibre optique et assurer sa mise en surlongueur de ladite valeur prédéterminée dans le tube relaxé.

Avantageusement, lesdits moyens de défilement en ligne sont constitués par une série de galets motorisés de rétreinte, pour l'élongation ultérieure de ladite valeur prédéterminée quel que soit le taux de rétreinte réalisée.

En variante, lesdits moyens de défilement sont associés à des moyens de rétreinte et sont les uns et les autres montés en amont dudit cabestan, pour l'élongation ultérieure de ladite valeur prédéterminée quel que soit le taux de rétreinte.

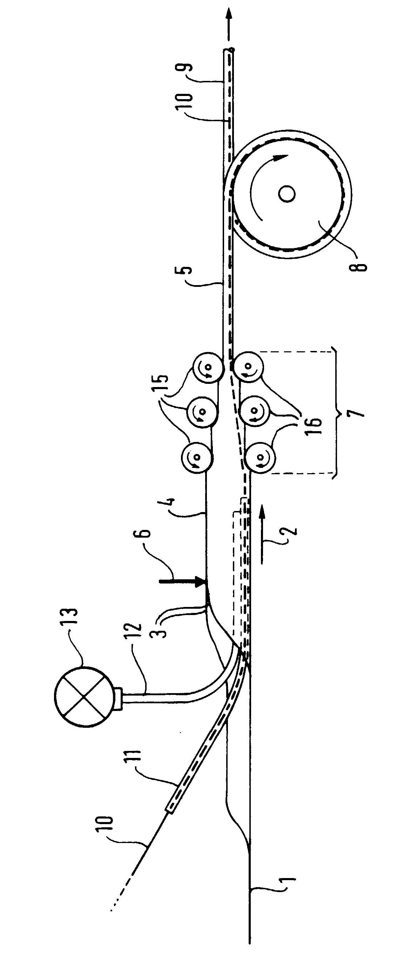

Les caractéristiques et avantages de la présente invention ressortiront de la description faite ci-après d'un mode de réalisation donné à titre d'exemple préférentiel et illustré dans la figure unique du dessin annexé.

Cette figure unique représente schématiquement une ligne de mise de fibres optiques sous tube métallique de protection, avec l'obtention d'une surlongueur des fibres réalisée selon l'invention.

Dans cette figure unique, on a illustré en 1 une bande métallique déformée progressivement en tube, par des moyens connus non représentés, qui est fermé de manière étanche par soudure laser et est ensuite rétreint, au cours du défilement selon la flèche 2 de la bande et du tube résultant sur une ligne de mise des fibres optiques dans ce tube. On a désigné par 3 le tube encore entr'ouvert, par 4 le tube soudé hermétiquement mais non rétreint et par 5 le tube juste après sa rétreinte. On a schématisé par une flèche 6 l'opération de soudure laser réalisée sous cette flèche au point correspondant de cette ligne. On a désigné par 7 le poste de rétreinte dans lequel défile le tube soudé 4 et schématisé en 8 un cabestan de traction du tube rétreint 5. On a désigné par 9 le tube métallique de protection, tel qu'il sort juste en aval de ce cabestan de traction.

Une ou de préférence plusieurs fibres optiques de transmission 10 sont mises dans ce tube de protection au fur et à mesure de la soudure étanche de celui-ci. A cet effet, un tube capillaire de guidage 11 est engagé dans le tube entr'ouvert 3 et s'étend dans le tube 4 soudé hermétiquement au laser mais non encore rétreint.

Parallèlement, un autre tube auxiliaire 12 d'injection de matière de remplissage est également engagé dans le tube entr'ouvert et s'étend dans le tube 4 soudé mais non rétreint. Il est relié à une pompe d'injection de matière de remplissage 13. L'injection de cette matière de remplissage est effectuée de manière contrôlée, en tant que telle connue mais non décrite car en dehors de la présente invention, pour un remplissage satisfaisant du tube final 9.

Selon la présente invention, la mise des fibres sous ce tube de protection avec l'obtention d'une surlongueur homogène, de valeur préétablie, est assurée par l'action conjuguée des moyens de rétreinte et de défilement en ligne du tube soudé, qui sont constitués par des couples galets motorisés de rétreinte tels que 15 et 16, et du cabestan 8, qui travaille à couple constant.

Ces couples de galets motorisés 15 et 16 sont choisis pour un taux de rétreinte souhaité du tube 4. Leur vitesse d'entraînement est choisie pour la vitesse de défilement souhaitée en ligne selon la flèche 2 de la bande 1 et du tube soudé 4. Le cabestan est quant à lui entraîné en rotation pour l'étirage du tube rétreint 5 et l'obtention d'une élongation donnée de ce tube à l'entrée du tube 5 sur ce cabestan et par conséquent de la surlongueur donnée correspondante des fibres dans le tube 9 relaxé dès sa sortie du cabestan 8.

En particulier le taux de rétreinte peut être nul, auquel cas les galets motorisés n'assurent que le défilement en ligne selon la flèche 2.

La vitesse d'introduction des fibres dans le tube capillaire de guidage 11 est donnée par la vitesse linéaire du tube rétreint 5 qui est étiré au point d'entrée sur le cabestan. Elle résulte de l'application des fibres contre la face interne du tube 5, qui est sollicité en pression contre le cabestan et provoque ainsi l'avance des fibres à la vitesse du tube rétreint.

La surlongueur des fibres dans le tube final de protection relaxé 9 est régulée en faisant travailler le cabestan à couple constant de valeur prédéterminée choisie, pour l'élongation voulue du tube 5 et la relaxation inverse du tube 9. Cette valeur prédéterminée du couple est définie en fonction de différents paramètres relatifs au tube de protection, notamment la nature et la géométrie de celui-ci, et aux fibres, notamment leur nombre et leur diamètre. Elle définit l'effort de traction constant exercé sur le tube déjà rétreint pour l'élongation voulue de ce tube et donc la surlongueur voulue résultante des fibres dans le tube rétreint mais relaxé.

Ce mode d'obtention de surlongueur des fibres par élongation du tube rétreint est indépendant du taux de rétreinte du tube. La régulation de la surlongueur est effectuée uniquement en faisant travailler le cabestan à couple constant et prédéterminé, pour soumettre le tube déjà entraîné pour son défilement en ligne et sa rétreinte, à un effort de traction constant et prédéterminé. L'élongation du tube, c'est-à-dire la surlongueur des fibres dans le tube relaxé est ainsi homogène sur toute sa longueur. La valeur du couple est réglée pour l'obtention de la valeur de surlongueur voulue.

Dans le mode préférentiel de réalisation illustré et décrit ci-avant le poste de rétreinte est constitué par une série de couples de galets motorisés. Les couples de galets motorisés utilisés définissent le taux de rétreinte voulu. Ce taux est réglable à convenance, selon les couples de galets utilisés de la série. On note aussi que les deux galets de chaque couple sont illustrés motorisés, mais l'un seul de ces deux galets peut être motorisé et l'autre libre en rotation.

En variante, on indique également que le poste de rétreinte peut comporter une ou des filières traditionnelles de rétreinte et un moyen de traction aval associé pour le défilement du tube dans la ou les filières. Un tel poste de rétreinte est comme précédemment suivi par le cabestan précité 8 travaillant à couple constant par rapport au moyen de traction alors associé à cette ou ces filières. La ligne de mise en oeuvre selon une telle variante reste relativement simple, son poste de rétreinte étant sensiblement plus long et encombrant que celui ne comportant que des galets motorisés.

## Revendications

1. Procédé de mise en surlongueur de fibres optiques dans un tube métallique de protection, consistant à mettre une bande métallique initiale en forme de tube, à souder de manière étanche ce tube, à entraîner simultanément en ligne la bande initiale et le tube formé et soudé et à introduire et faire avancer au moins une fibre optique dans le tube formé et soudé en donnant une surlongueur voulue à chaque fibre optique, caractérisé en ce qu'il consiste à soumettre ledit tube soudé et entraîné en ligne à un étirage ultérieur d'une valeur prédéterminée, à réaliser l'avance de chaque fibre optique dans ledit tube à la vitesse linéaire d'avance du tube étiré, puis à laisser se relaxer le tube étiré, pour obtenir la surlongueur voulue égale à ladite valeur prédéterminée dans le tube relaxé.

2. Procédé selon la revendication 1, caractérisé en ce qu'il consiste à réaliser ledit étirage en appliquant un effort de traction constant et prédéterminé au tube entraîné en ligne.

3. Procédé selon la revendication 1, caractérisé en ce qu'il consiste à rétreindre ledit tube soudé avant ledit étirage, l'élongation dudit tube lors de son étirage étant indépendante du taux de rétreinte réalisée.

4. Ligne de mise de fibres optiques sous tube métallique de protection, mettant en oeuvre le procédé selon la revendication 1 et comportant des moyens de formage pour déformer ladite bande en tube, des moyens de soudage étanche du tube formé, des moyens d'introduction de chaque fibre optique dans ledit tube formé et soudé, des moyens d'avance de chaque fibre optique et des moyens de défilement en ligne de la bande et du tube formé et soudé, caractérisée en ce qu'elle comporte un cabestan (8), monté en aval desdits moyens de défilement (15, 16), travaillant à couple constant et recevant ledit tube soudé et entraîné en ligne, pour constituer des moyens d'étirage de ce tube d'une valeur prédéterminée et assurer la relaxation du tube étiré en sortie dudit cabestan et pour simultanément constituer lesdits moyens d'avance de chaque fibre optique et assurer sa mise en surlongueur de ladite valeur prédéterminée dans le tube relaxé.

5. Ligne selon la revendication 4, caractérisée en ce que lesdits moyens de défilement en ligne sont constitués par une série (7) de galets motorisés de rétreinte simultanée (15, 16), pour l'élongation ultérieure de ladite valeur prédéterminée du tube rétreint quel que soit le taux de rétreinte réalisée par lesdits galets.

6. Ligne selon la revendication 4, caractérisée en ce que lesdits moyens de défilement sont montés entre des filières de rétreinte et ledit cabestan, pour l'élongation ultérieure de ladite valeur prédéterminée du tube rétreint, quel que soit le taux de rétreinte réalisée par lesdites filières.
